# EUROPEAN PATENT SPECIFICATION

(11) **EP 4 336 055 B1**
(45) Date of publication and mention of the grant of the patent: **26.03.2025**
(21) Application number: 22194708.8
(22) Date of filing: 08.09.2022
(51) Int. Cl.: F16B 5/06, F16B 21/06

(54) **MOUNTING DEVICE FOR SPORT ACCESSORIES**
BEFESTIGUNGSVORRICHTUNG FÜR SPORTZUBEHÖR
DISPOSITIF DE MONTAGE POUR ACCESSOIRES DE SPORT

(43) Date of publication of application: 13.03.2024
(73) Proprietor: CSEM Centre Suisse d'Electronique et de Microtechnique SA - Recherche et Développement, 2002 Neuchâtel (CH)
(72) Inventor: SIGURTHORSDOTTIR, Halla, 1003 Lausanne (CH); CRETTAZ, Mathilde, 1004 Lausanne (CH); MANON, Anaelle, 1005 Lausanne (CH); BONNAL, Benjamin, 2300 La Chaux-de-Fonds (CH)
(74) Representative: e-Patent SA

(56) References cited:
- JP-B2- 5 265 478
- US-A1- 2012 099 849
- US-B2- 10 416 538
- US-B2- 9 033 596

## Description

### Technical Field

The invention is in the field of mechanical systems for mounting removable accessories on sport equipment or vehicles.

### State of the art

Recent developments in loT sensors, miniature cameras, GPS trackers and other wireless devices have enabled vast possibilities in sports for detailed monitoring and recording of the performance of athletes. These accessories are preferably mounted on a sport equipment or vehicle when starting the practice of a sport and removed when finished. The mounting interface should enable an easy operation of fastening and removal of the accessory, while guarantying a secure hold of the device, adapted to the shocks and vibrations expected for the specific sport gear or vehicle.

One example of sport gears particularly exposed to strong shocks are ice-skates. Monitoring the performance of figure skaters or hockey players by integrating motion and strength sensors in the ice skates has been proposed in the past, see for example WO14121374A1. In this document, as in other similar publications, the sensors are integrated in the skate boot, affixed with screws in a rather complex mounting scheme which diverges from the purpose of using the sensor as a removable accessory.

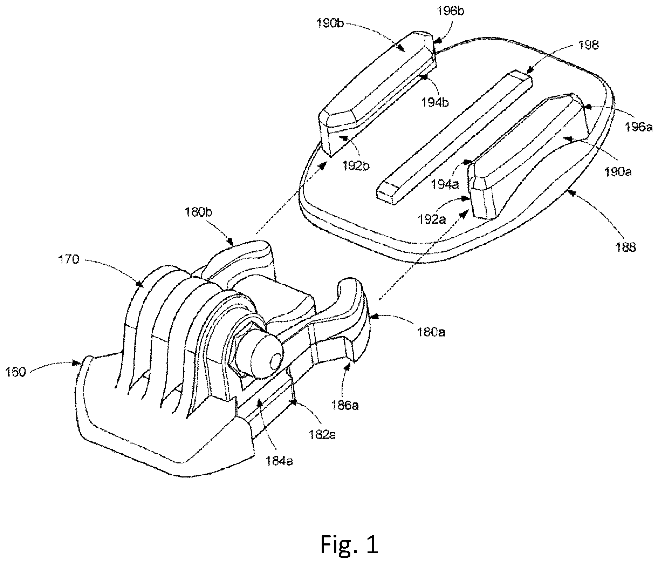

US11029584B2 discloses a detachable mounting device providing a convenient interface for fastening and removing a small camera for sport gears. To facilitate the description of this prior art and for comparison with the present invention, Fig. 1c of the cited document is reproduced in Fig. 1 of the present disclosure (the original figure references are also reproduced). In the system described in US11029584B2, the camera is assembled on a sliding mount component 160 comprising a locking mechanism. The sliding mount component can be mounted and detached from a base component 188, assembled on the sport gear. The sliding mount 160 is secured to the base 188 by a rail system 190a, 190b, and locked by securing lips 186a, (186b not visible in this Fig.), protruding from two flexible prongs 180a, 180b. For mounting the camera, the sliding mount is pushed between the securing arms 190a, 190b of the base, forcing a squeeze of the prongs until they reach the locking position, where the prongs expand again and the securing lips 186a, 186b prevent backwards sliding of the mount. To detach the sliding mount, the user must squeeze again the flexible prongs 180a, 180b using his fingers to release the securing lips out of the locking position and pull the mounting slide out of the base with a backwards sliding move.

According to this scheme, the force needed to release the securing lips 186a, 186b out of the locking position is limited to the pressure that a human hand can exert between the tip of the thumb and another opposed finger. This force must not excessively engage the muscular resources of the hand, since ideally the same hand should be able to control the backwards move of the sliding mount to detach the camera. These aspects constitute a design limit for the elastic force which secures the locking mechanism of the sliding mount. For certain sport gears such as skateboards or ice skates, where important shocks are to be expected, a weak locking force can result in an accidental release of the attached accessory during the practice of the sport. Another camera mount is known from US 9 033 596 B2.

There is thus a need for a mounting device capable of withstanding important shocks without losing the mounted accessory, while providing simple, effortless mounting and detaching operations.

### Disclosure of the invention

An aim of the present invention is to propose a mounting device for mounting an accessory on a sport gear or vehicle, with an improved capability of supporting shocks without losing the mounted accessory, and enabling simple, effortless mounting and detaching operations.

This aim is achieved by providing a mounting device according to claim 1, comprising a first main part which is a base plate, intended to be assembled with the sport gear or with the vehicle, and a second main part, which is a support for the accessory, said second main part being connectable to said first main part by a relative sliding movement along a longitudinal direction, until said base plate and said support are in a locked configuration. Each of said two main parts comprises a rigid structure, said rigid structure comprising a pair of lateral guiding surfaces arranged so as to slide against the lateral surfaces of the other main part during said relative sliding movement.

The mounting device of the invention is particularly characterized in that the rigid structure of one of said two main parts comprises a locking tooth extending in a locking direction which is essentially perpendicular to said longitudinal direction, whereas the rigid structure of the other main part comprises a locking opening adapted to receive said locking tooth in said locked configuration. The mounting device of the invention is further characterized in that at least one of said two main parts further comprises an elastic organ adapted to apply a force on the rigid structure of the other main part, essentially parallel to said locking direction, so as to keep the locking tooth engaged in the locking opening in said locked configuration.

It may be worth clarifying the notion of "rigid structure" as used in the present disclosure, as it is clear that no physical object is strictly speaking "rigid" but will always deform to a certain extent under the action of a mechanical stress. In the context of the present document, and in line with the common understanding of the skilled person, it is considered that any elements comprised in a rigid structure, upon the application of the forces involved in the normal use of the device, will not substantially deform, or change their relative positions in a manner that is essential to the function of the device. As means of example, in Fig. 1, the sliding mount 160 does not conform a rigid structure with the securing lip 186a, because the latter is borne by a flexible prong 180a. Consequently, in the operation of attaching or detaching the sliding mount 160 to the base 188, the securing lip 186a is shifted with the flexible prong 180a with respect to other elements of the sliding mount 160 such as the rigid surfaces 182a and 184a. This deformation is essential to the function of the device of Fig 1; therefore, the sliding mount 160 of Fig. 1 does not conform a rigid structure comprising the securing lip 186a. On the other hand, the base 188 would be considered a rigid structure as a whole, since none of its parts move significantly relative to each other during the normal operation of the device.

Also, according to the common understanding of the skilled person, a rigid structure will still be recognized as such even if some of its surfaces are covered with some slightly deformable material, such as a protective fabric, a textile, a soft anti-vibration cushion or a lubricant.

Advantageously, the pair of lateral guiding surfaces comprised in the rigid structure of each of the two main parts of the mounting device of the invention can be arranged as parallel surfaces facing opposite directions.

In particular, the planes of said lateral guiding surfaces, parallel and facing opposite directions, can be advantageously oriented being parallel to both, said longitudinal direction and said locking direction. In this arrangement, the lateral guiding surfaces fully constrain the relative displacement of one main part with respect to the other along the direction perpendicular to the lateral guiding surfaces' plane. Once the lateral guiding surfaces of one main part are engaged against the lateral guiding surfaces of the other main part, the only possible relative motion between the two main parts would be along the longitudinal direction of sliding and along the locking direction.

Advantageously, the mounting device of the invention can be configured such that the unmounting operation involves extracting said locking tooth from said locking opening against the action of said elastic organ, by inducing a relative unlocking movement between said base plate and said support. The unlocking movement essentially takes place according to an unlocking direction, opposite to said locking direction, and enables said two main parts to be separated by a reverse relative sliding movement.

More advantageously, said relative unlocking movement may comprise a rotation about a rotation axis which is perpendicular to both, said longitudinal direction and said locking direction.

In this case, according to another advantageous aspect, the rigid structure of the second main part of the mounting device may comprise a handling surface adapted to be pushed or pulled by a person's hand to perform said relative unlocking movement of rotation about said rotation axis. Advantageously, said handling surface may be provided at a distance from said rotation axis at least equal to, and preferably greater than, the distance from said rotation axis to an effective point of application of the force applied by said elastic organ on the second main part.

It may be worth clarifying the notion of effective point of application of the force applied by the elastic organ, as described above. According to the invention, the elastic organ may be configured to interact with said other main part at one contact region or at several contact regions. When only one contact region is involved, the effective point of application of the elastic force simply corresponds to the position of said contact region. On the other hand, when a plurality of contact regions is involved, the elastic force applied on each contact region will define a moment of force with respect to a rotation axis. The combined effect of said moments of force will then be equivalent to the application of an effective central force applied at a center of force as described in classical mechanics. In this case, the "effective point of application" referred in the previous paragraph corresponds to said center of force.

Alternatively, the unlocking movement could be a relative translation or a combination of a relative rotation and a translation between the two main parts.

It appears from what precedes that the structure of the present invention implies a manipulation of the mounting device, more particularly for separating its two main parts from each other, which is quite different from that of the prior art device illustrated in Fig. 1, in an easier way. In the case of the prior art device, a user has to apply a localized pressure on both securing lips 186a and 186b, in a simultaneous manner, for unlocking the device, and then only can he seize the sliding mount 160 to pull it back along the base 188. In a very different manner, it is simply required to seize, once for all and with just one hand, one of the two main parts of the mounting device according to the invention, by its rigid structure, to induce a first relative movement between the two main parts so as to extract the locking tooth from the locking opening, and then a reverse relative sliding motion to separate the main parts from each other. It is thus much more comfortable to catch a whole rigid structure to move it, than to apply a pressure on two distant tiny localized surfaces (the securing lips).

According to another advantageous aspect, the rigid structure of at least one of said two main parts of the mounting device may further comprise an engagement surface defining an angle greater than 0° and lower than 90° with respect to said longitudinal direction, configured to progressively deflect the elastic organ as said relative sliding movement is performed.

According to one aspect, the elastic organ of the proposed device may conveniently be fabricated from a metallic material. Metals are known for their relatively high Young modulus as compared to polymers. This is convenient when a high elastic force is desired in response to a relatively small deformation. Also, compared to polymers, metals present a higher elastic limit and excellent resistance to elastic fatigue. Their elastic properties are also less likely to be degraded because of exposure to light, temperature changes or aging.

Conveniently, a metallic elastic organ suitable for implementing the invention can be provided in the form of a folded metal sheet.

If polymer materials are less interesting than metals with respect to their elastic properties, they can be advantageous in terms of fabrication possibilities and cost. For example, the technique of plastic injection moulding allows the fabrication in large quantities and at low cost, of rigid parts with complex 3D-geometries. As such, the rigid structures of the mounting device according to the present invention may be advantageously fabricated, at least essentially, from a plastic material, preferably by plastic injection moulding.

Advantageously, said first main part of the mounting device may additionally comprise an interface of soft material comprising for example a viscoelastic polymer, adapted to absorb shocks or vibrations from the sport gear or vehicle such as to reduce the transmission of said shocks or vibrations to said second main part, and ultimately to the accessory.

In general, it may be preferable to configure the mounting device, with said elastic organ being borne by said first main part, which is assembled to the sport gear or vehicle.

Advantageously, the rigid structure of said first main part and said elastic organ may be configured as two distinct parts which are assembled.

More advantageously, said two distinct parts may be configured to be assembled by simultaneously fixing them on the sport gear or vehicle, for example with screws.

Typical accessories which can be attached to sport gears or vehicles with the present mounting device can be electronic sensors, including motion sensors, accelerometers, pressure, or temperature sensors. The accessories may also comprise microphones, cameras, GPS trackers, RF tags or battery packs. Non-electronic accessories such as decorative articles or small boxes for keys, wallets or food can also be considered. These examples should not be regarded as a limitative list for the scope of the present invention. In general, the weight of the suitable accessories should not exceed a few kilograms and is preferably below 0.5 kg, more preferably below 200 g.

Typical sport gears and vehicles where such accessories can be mounted include ice skates, roller blades, skateboards, skis, protective equipment such as helmets or knee pads, mini-scooters, bikes, hang-gliders, paragliding equipment, as well as motorized vehicles including aircrafts and unmanned aircrafts. These examples should not be regarded as a limitative list for the scope of the present invention.

In general, it may be advantageous to configure the mounting device of the invention such that the elastic force applied by said elastic organ in the locked configuration is at least equal to, and preferably greater than 5N.

Further advantageous features of the present invention are included in the appended dependent claims.

The ease of handling of the present mounting device and its simple design, suitable for low-cost large-volume production, make it also convenient for applications not necessarily involving the strongest shocks, as an alternative to other mounting systems of the prior art.

### Brief description of the drawings

Further details of the invention and other advantageous embodiments will appear more clearly upon reading the description below, in connection with the following figures which illustrate:
- Fig. 1: Mounting device as known from the prior art, reproduced from US11029584B2,
- Fig. 2A: Exemplary embodiment of a mounting device according to the invention,
- Fig. 2B: One of the two main parts of the mounting device of Fig. 2A,
- Fig. 2C: The other of said two main parts of the mounting device of Fig. 2A,
- Fig. 3: Examples of alternative embodiments of one of the two main parts of a mounting device according to the invention,
- Fig. 4: Schematic representation of two possible embodiments of mounting devices according to the invention (cut view),
- Fig. 5: Schematic representation of another embodiment of a mounting device according to the invention, illustrating a force diagram related with the unlocking movement between the first and the second main parts (cut view),
- Fig. 6: Schematic representation of another exemplary embodiment of a mounting device according to the invention,
- Fig. 7: Schematic representation of another exemplary embodiment of a mounting device according to the invention,
- Fig. 8: First main part of another exemplary embodiment of a mounting device according to the invention and its sub-components,
- Fig. 9: Second main part corresponding to the same exemplary mounting device of Fig. 8 and a detail of its rigid structure,
- Fig. 10: Assembled mounting device of Figs. 8 and 9, represented in its locked configuration. The figure also depicts a hand in the position to perform the unlocking movement to release the second main part.

### Embodiments of the invention

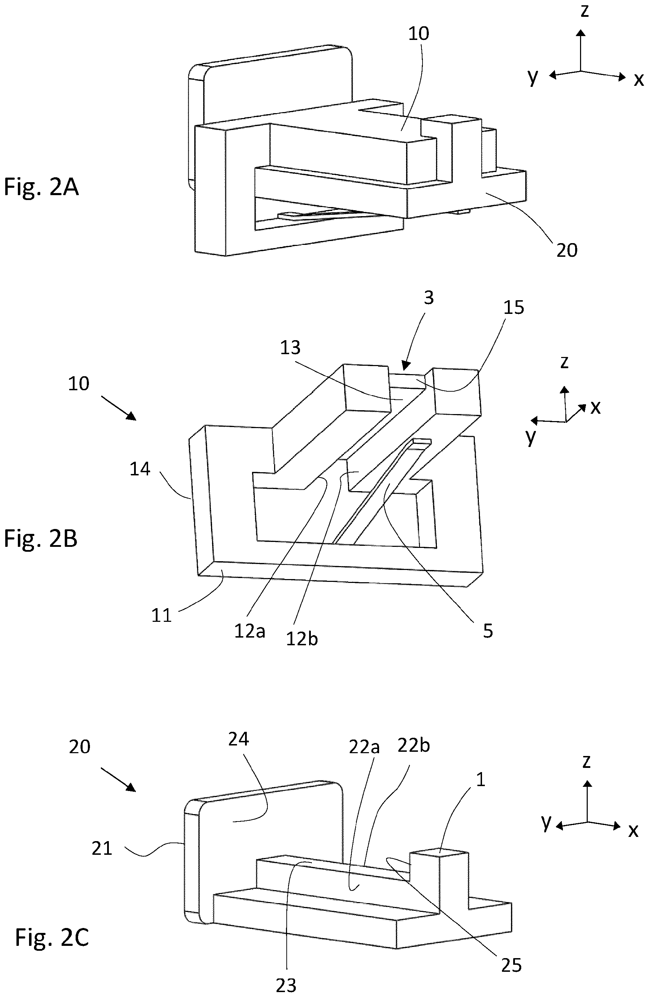

Fig. 2A represents a possible embodiment of a mounting device according to the invention, with two main parts 10, 20, assembled in a locked configuration. The assembly of the parts can be realized by performing a relative sliding movement of one part with respect to the other along a longitudinal direction until reaching a locking position. The longitudinal direction of the sliding movement used to connect the two parts is represented in the figure as the x direction, whereas z is the locking direction. Separate drawings of the two main parts are presented in greater details in Figs. 2B and 2C.

The part represented in Fig. 2B is identified here as the first main part, or the base plate 10. As such, this part is configured to be assembled with the sport gear or with the vehicle (in the following paragraphs the sport gear or vehicle will be referred to as "the sport gear" for simplicity). The assembly surface 11 may for example provide an interface configured for the assembly of the base plate 10 on the sport gear. The nature of this mechanical interface could be of any nature including gluing means, or clipping mechanisms or, preferably, screws (not represented in the figure).

The part represented in Fig. 2C is identified here as the second main part, or the support of the accessory, in the following referred to as "the support part" 20. The accessory may be directly integrated in the structure of the support part 20, or be connected to it for example, through an assembly interface 21. The assembly of the accessory to the support part 20 can be provided by any attaching means, such as gluing, clipping or screws. Alternatively, the accessory may be directly integrated anywhere in the support part 20.

The identification of the part in Fig. 2B as the base plate 10, and the part in Fig. 2C as the support part 20 is an arbitrary choice which we make explicit to simplify the description. From a structural point of view, these parts could have as well inversed roles as base plate and support part. Indeed, both the assembly surface 11 and the assembly interface 21, represent here generic mechanical interfaces which could serve to attach each part indistinctly to either the sport gear or the accessory.

The support part 20 of this example (Fig. 2C) completely consists of a rigid structure. According to the invention, this rigid structure comprises a pair of lateral guiding surfaces 22a, 22b, and a locking tooth 1, extending in the locking direction z, which is perpendicular to the longitudinal direction x.

The base plate 10 of this example (Fig. 2B) also has a rigid structure comprising a pair of lateral guiding surfaces 12a, 12b, arranged to receive the lateral guiding surfaces 22a, 22b of the support part 20, and to guide the sliding movement of the support part 20 along the longitudinal direction x, relative to the base plate 10.

As the support part 20 is pushed along the longitudinal direction x, guided by the pairs of lateral guiding surfaces 12a, 12b, 22a, 22b, its rigid structure will push downwards (with respect to the orientation of the drawing) an elastic organ 5, provided in the base plate 10. This will cause the elastic organ 5 to apply a force on the support part 20 essentially directed along the locking direction z.

When the support part 20 reaches the locking position, the locking tooth 1 faces a locking opening 3 defined in the rigid structure of the base plate 10 and is pushed inside said locking opening 3 by the action of the elastic organ 5 on the rigid structure of the support part 20. The device is then in the locked configuration, as represented in Fig. 2A.

In the example of Fig. 2A-C, each pair of lateral guiding surfaces 12a, 12b and 22a, 22b, is configured as a pair of parallel surfaces with opposite orientation, i.e., facing opposite directions. Indeed, the surface 22a is oriented perpendicular to the y axis, facing the y direction, whereas the surface 22b is also oriented perpendicular to the y axis, but facing the -y direction. Equivalently the surfaces 12a and 12b are both perpendicular to the y axis but face respectively the -y and y directions.

Advantageously in this configuration, during the sliding motion of the support part 20 relative to the base 10, any relative movement between the parts along the y direction is prevented. This facilitates the guiding of the two main parts with a single hand to perform the sliding motion along a well-defined axis x until the locked configuration is reached.

In the locked configuration, the same lateral guiding surfaces 12a, 12b, 22a, 22b still prevent any relative motion of the two main parts 10, 20 along the y direction. In the -z direction, i.e., opposite to the locking direction, the relative motion is prevented by the elastic force applied by the elastic organ 5 directly on the rigid structure of the support part 20. The elastic organ 5 is still under stress in the locked configuration due to the presence of the rigid structure of the support part 20, which pushes it downwards (with respect to the orientation of the drawing).

In this example, the rigid structure of the base plate 10 comprises an additional contact surface 13, which contacts a corresponding contact surface 23 of the rigid structure of the support part 20 in the locked configuration. The interaction between these contact surfaces 13, 23 in the locked configuration prevents a relative motion of the support part 20 along the locking direction z. The friction between these contact surfaces 13, 23, may also contribute to prevent a relative shift of the support part 20 along the longitudinal direction x.

For better securing the position of the device in the locked configuration along the longitudinal direction, further blocking surfaces can be provided. For example, in the device of Figs. 2A-C, the blocking surfaces 24 and 14 cooperate to prevent the motion of the support part 20 along the x direction any further beyond the locked configuration. Similarly, the blocking surfaces 25 and 15, prevent a backwards slide of the support part 20 when the locking tooth 1 is engaged in the locking opening 3 in the locked configuration.

As can be understood in this example, in the locked configuration almost any relative motion of the two main parts is blocked by cooperating surfaces 13, 23, 14, 24, 15, 25 of their rigid structures. In this situation, the only possibility to produce a relative movement between the two main parts 10, 20 is to push back the support part 20 in the direction -z, opposite to the locking direction z, against the action of the elastic organ 5. This unlocking movement may disengage the locking tooth 1 from the locking opening 3, allowing a reverse relative sliding motion of the support part 20 along the -x direction to disconnect the two main parts 10, 20.

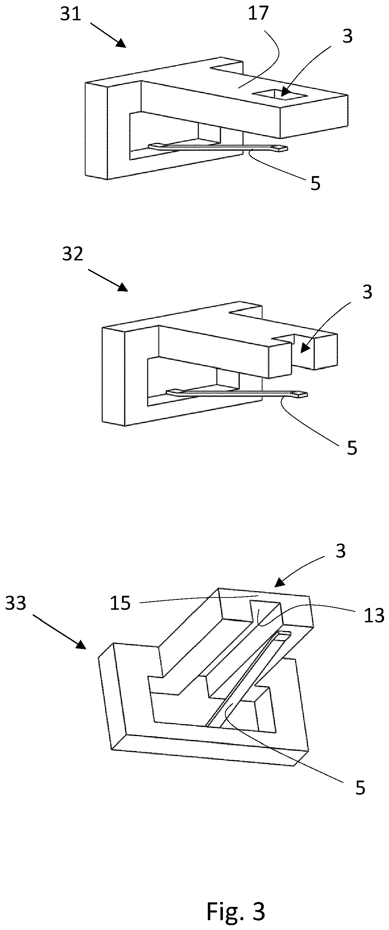

Fig. 3 illustrates different exemplary embodiments of one of the two main parts of the invention which differ in the way of implementing the locking opening 3. As far as main part 31 is concerned, the locking opening 3 is provided as a hole with a closed perimeter approximately matching the shape of the locking tooth of the other main part. In this example, the opening has the form of a tap hole, open from the bottom to the top surface 17 of the rigid structure of the part 31. Notice that this is not necessarily always the case. The top surface 17 could be closed, with the locking opening 3 remaining hidden underneath.

As far as main part 32 is concerned, the locking opening 3 is provided as a hole with a semi-open perimeter, adapted to receive, but not completely enclose the corresponding locking tooth of the other main part. The locking opening 3 of the device of Figs. 2A-C corresponds to this type of configuration.

As far as main part 33 is concerned, the locking opening 3 is simply implemented as the open end of the contact surface 13. As such, the locking opening 3 of main part 33 only presents one rigid blocking surface 15 which will directly cooperate with the locking tooth (not represented) to prevent in this case the backwards sliding motion along the longitudinal direction of the device.

What generally defines the locking opening 3 according to the present invention, is the interruption of a rigid surface or surfaces which are part of the rigid structure, allowing the accommodation of the locking tooth of the other part by a relative displacement along the locking direction driven by the force applied by the elastic organ.

As discussed already for Fig. 2, the different main parts 31, 32, 33, of Fig. 3, need not be identified as being either the base plate 10, or the support part 20. Both functions are equally possible and depend only on the type of interface adapted to attach the part to respectively the sport gear or the accessory.

In all three embodiments of Fig. 3, the represented main part 31, 32, 33 comprises not only the locking opening 3, but also the elastic organ 5 of the invention. This is not necessarily always the case.

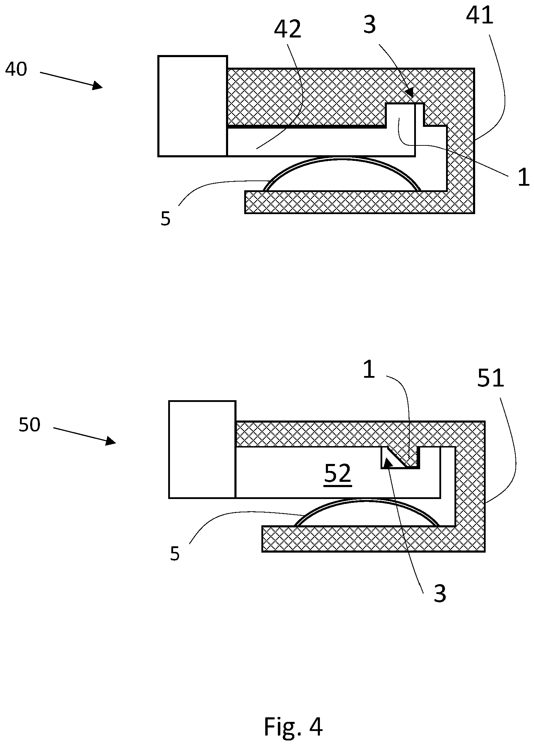

Fig. 4 shows a schematic representation (cut view) of two alternative embodiments 40, 50 of the mounting device, where in a first case 40, the main part 41 comprising the elastic organ 5 also comprises the locking opening 3 of the system. In contrast, in the second case 50, the main part 51 comprising the elastic organ 5, also comprises the locking tooth 1 of the system, whereas the locking opening 3 is provided in the second main part 52, which comprises no elastic organ in this case.

Again, none of the main parts 41, 42, 51, 52, represented in Fig. 4 needs to be identified as being either the base plate or the support part of the mounting device.

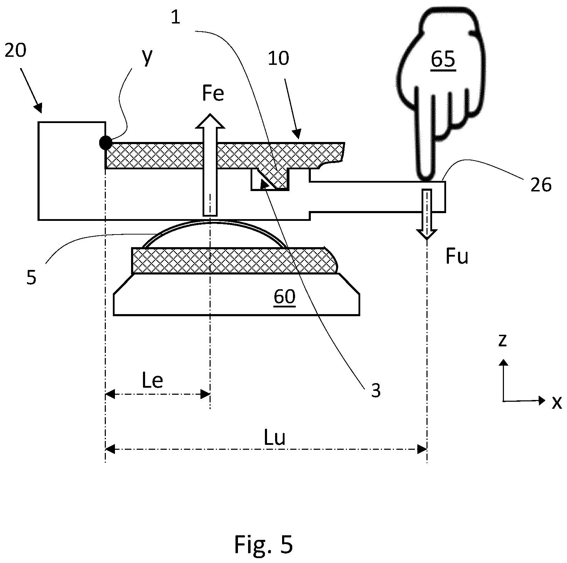

Fig. 5 represents one advantageous aspect of a possible embodiment of the invention. In this figure, the base plate 10 attached to a sport gear 60, is represented in a cut view with a patterned surface. In the cut view, the base plate 10 appears divided in two parts. For the sake of clarity, it is pointed out here that this is only due to the cut perspective. The base plate 10 of this example is constituted by a unique rigid structure. The base plate 10 also comprises in this example the elastic organ 5 of the invention.

According to one advantageous aspect, the relative unlocking movement necessary to disengage the locking tooth 1 from the locking opening 3 may comprise a rotation about a rotation axis y which is perpendicular to both, the longitudinal direction x and the locking direction z. For applications requiring a particularly strong hold of the accessory on the sport gear 60, the elastic force Fe applied by the elastic organ 5, opposed to said unlocking movement will necessarily be relatively high, for example, higher than 5N (equivalent weight of ca. 500g). Conveniently, the support part 20 may be provided with a handling surface 26, configured to facilitate the application by a hand 65 of an unlocking force Fu, to counteract the elastic force Fe and effectively execute the unlocking movement involving the relative rotation of the support part 20 about the rotation axis y.

Advantageously, the distance Lu from said rotation axis y to said handling surface 26 can be designed to be greater than the distance Le from said rotation axis y to the point where the elastic organ applies said elastic force Fe on the support part 20. This configuration provides a lever effect by means of which the unlocking force Fu, necessary to execute the unlocking movement will be smaller than the elastic force Fe opposed to said unlocking movement. This contributes to reduce the hand effort in detaching the support part, while enabling a strong elastic force Fe which secures the locked configuration against the inertial forces involved in a shock of the sport gear 60.

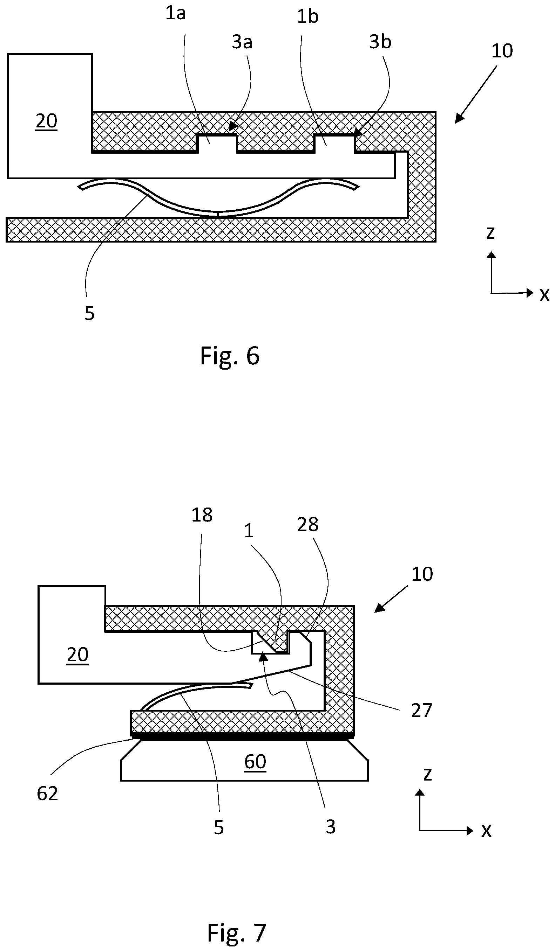

Alternatively, the unlocking movement could be a relative translation or a combination of a relative rotation and a translation between the two main parts. Fig. 6 represents schematically (cut view) an embodiment of a mounting device according to the invention, configured such that the unlocking movement will be essentially a translation movement in the direction opposite to the locking direction z.

In this exemplary embodiment the support part 20 comprises a first locking tooth 1a and a second locking tooth 1b disposed at different positions along the longitudinal direction x. Correspondingly, the base plate 10 is provided with a first locking opening 3a and a second locking opening 3b configured to receive said two locking teeth 1a, 1b. In the locked configuration, a strict rotation movement of the support part 20 is hindered by the mechanical constrain of the two parallel locking teeth 1a, 1b in the x-y plane. The only possible unlocking movement is thus a relative translation movement of the whole support part 20 in the direction opposite to the locking direction z.

Obviously, the tolerances of most mechanical systems will generally result in realizations where the unlocking movement will not be a strict rotation or a strict translation of one part with respect to the other, but rather a combination of both.

According to another aspect, Fig. 6 also presents an example where the elastic organ 5, attached in this case to the base plate 10, presents two contact points with the other main part, in this case the support part 20. In this example the two contact points are disposed at different positions along the longitudinal direction x. Other embodiments may comprise multiple contact points between the elastic organ 5 and the other main part, arranged along different directions, for example, along the y direction, perpendicular to both the longitudinal direction x and the locking direction z. The elastic organ 5 may be configured as a single flexible structure, like represented in Fig. 6, or may alternatively be conformed as a plurality of distinct elastic elements.

Further advantageous features of possible embodiments of the mounting device are represented in Fig. 7.

According to one aspect, the sliding of the support part 20 along the longitudinal direction x towards the locked configuration, can be facilitated by the provision of engagement surfaces 18, 28, 27 on the rigid structures of one or both of the main parts 10, 20. These engagement surfaces 18, 28, 27 define an angle greater than 0° and lower than 90° with respect to said longitudinal direction x and are configured to provide a progressive deflection of the elastic organ as the relative sliding movement of the support part 20 towards the locking position is performed.

For example, the engagement surface 27 is designed to present a progressively increasing thickness of the support part 20 as it is inserted between elastic organ 5 and the rigid structure of the base plate 10.

The engagement surfaces 18 and 28 of, respectively, the base plate 10 and the support part 20, are designed to cooperate, facilitating the downwards motion of the support part 20 as its front end passes above the locking tooth 1, increasingly deflecting the elastic organ 5, until it finally reaches the locking position where the locking tooth 1 is received in the locking opening 3 of the support part 20.

Another advantageous aspect of a possible embodiment of the invention represented in Fig. 7 concerns the mechanical interface between the base plate 10 and the sport gear 60. Here, the base plate 10 is provided with an additional layer 62 comprising a soft material, preferably a viscoelastic polymer, adapted to absorb shocks or vibrations from the sport gear, such as to reduce the transmission of said shocks or vibrations to the support part 20, and ultimately to the attached accessory.

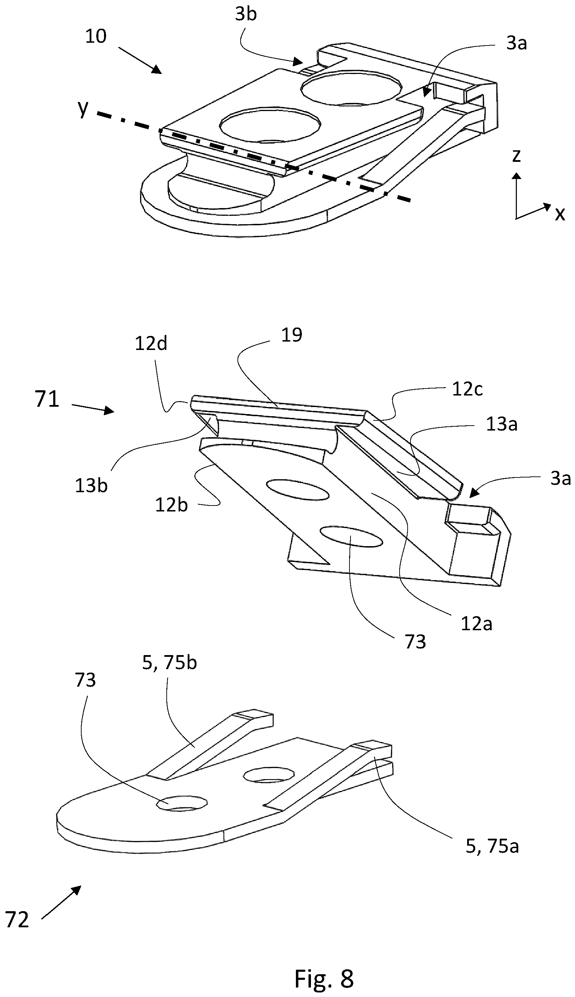

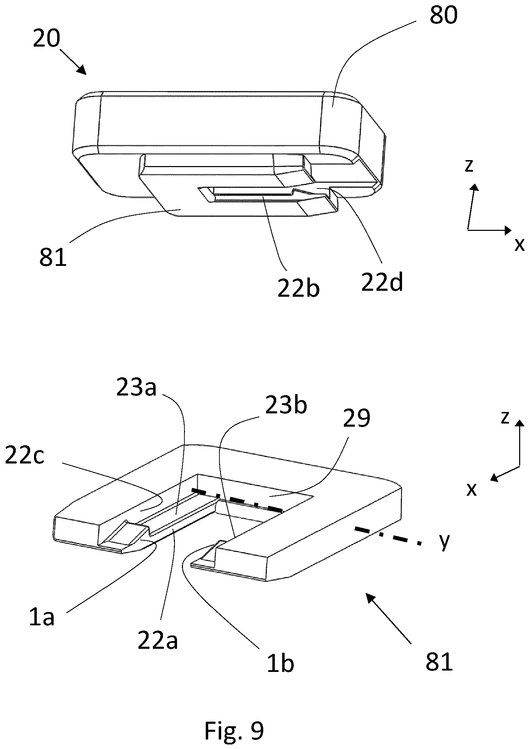

Figs. 8 and 9 show respectively the base plate 10 and the support part 20 of another embodiment of a mounting device according to the invention. Advantageously, the base plate 10 is provided by the assembly of two distinct parts: a docking pilar 71 conformed as a single rigid structure, and a flex base 72 comporting the elastic organ 5. In this example, the elastic organ 5 is provided in the form of two flexible prongs 75a, 75b extending upwards from the flex base 72 and arranged on both sides of the docking pilar 71, which is in a central position when the base plate 10 is assembled.

Advantageously, the two distinct parts 71, 72 of the base plate 10 may be assembled at the same time as the base plate is assembled on the sport gear. In the example of Fig. 8, both the docking pilar 71 and the flex base 72 comprise tap holes 73 which can be aligned to simultaneously attach the two distinct parts 71, 72, to the sport gear with screws, providing the assembled base plate 10.

Advantageously, the flex base 72 may be fabricated by folding a metal sheet, for example an Aluminum, brass or steel sheet of 0.3 mm to 3 mm thickness. The central docking pilar 71 may advantageously be fabricated from a plastic material, less costly and easier to machine than metals.

In this exemplary embodiment, the rigid structure of the docking pilar 71 comprises a main pair of lateral guiding surfaces 12a, 12b facing outwards and defined by parallel planes oriented parallel to both the longitudinal direction x and the locking direction z. Additionally or alternatively, other lateral surfaces 12c, 12d, may contribute to the guiding of the support part 20 in the sliding movement along the longitudinal direction x.

The docking pilar 71 further comprises two contact surfaces 13a, 13b, protruding outwards, perpendicular to the main lateral guiding surfaces 12a, 12b, wherein the ends of said contact surfaces 13a, 13b provide two locking openings 3a, 3b, adapted to receive two corresponding locking teeth 1a, 1b of the support part 20.

Advantageously, a protruding edge 19 at the back of the docking pilar 71, oriented along an axis y perpendicular to both the longitudinal direction x and the locking direction z, provides a pivoting edge around which the support part 20 may rotate during the locking and unlocking operations of the mounting device.

The support part 20 in Fig. 9 is configured to cooperate with the base plate 10 of Fig. 8 according to the invention. The support part 20 comprises a rigid case 80 carrying the accessory, which can for example comprise motion sensors for tracking the performance of an athlete. The rigid case 80 may additionally comprise an electronic interface to connect, charge or communicate with the carried accessory.

The rigid case 80, may be monolithically constructed, or simply assembled with a rigid support structure 81, conformed as a single rigid structure. The rigid support structure 81 comprises a main pair of lateral guiding surfaces 22a, 22b facing each other and defined by parallel planes oriented parallel to both the longitudinal direction x and the locking direction z. These lateral guiding surfaces 22a, 22b, are configured to cooperate with, respectively the lateral guiding surfaces 12a, 12b of the base plate 10 in guiding the sliding movement of the support part 20 along the longitudinal direction x. Additionally or alternatively, other lateral surfaces 22c, 22d, may contribute to the guiding of the support part 20, by cooperating with the corresponding lateral surfaces 12c, 12d of the base plate 10.

The rigid support structure 81 also comprises two contact surfaces 23a, 23b, perpendicular to the main lateral guiding surfaces 22a, 22b, configured to be pressed against the corresponding contact surfaces 13a, 13b of the base plate 10, under the action of the flexible prongs 75a, 75b in the locked configuration. At the forward extremity of said contact surfaces 23a, 23b, there are provided two locking teeth 1a, 1b, extending in the locking direction z, configured to be received in the locking openings 3a, 3b, of the base plate 10 in the locked configuration.

At the other end of the contact surfaces 23a, 23b with the perpendicular surface 29, a pivoting corner is conformed, which cooperates with the protruding edge 19 of the base plate 10, facilitating the rotation of the support part 20 around the pivoting axis y during the locking and unlocking operations of the mounting device.

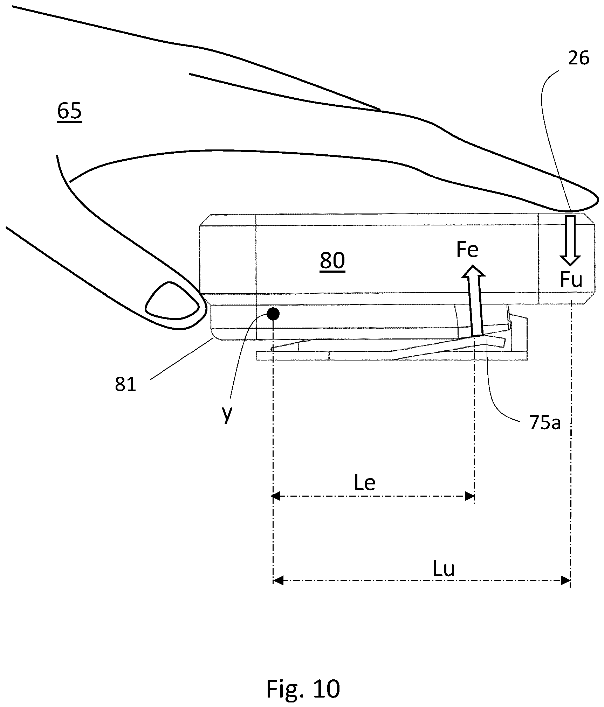

Fig. 10 represents the exemplary mounting device of Figs. 8 and 9 in the locked configuration and depicts a hand 65 positioned to perform the unlocking operation of the device. Conveniently the rigid case 80 provides a handling surface 26 adapted to be pushed by the hand 65 to perform the rotation about the y axis necessary to unlock the device. Advantageously, said handling surface 26 is provided at a distance Lu from the rotation axis y which is greater than the distance Le from said rotation axis y to the effective point of application of the elastic force Fe applied by the flexible prongs 75a, 75b on the rigid support structure 81. The resulting lever effect helps reducing the force Fu necessary to counteract the elastic force Fe to initiate the unlocking movement.

Most importantly, it can be noticed that the exemplary device of Fig. 10 is configured such that the hand 65 needs not performing any squeezing pressure between the tips of the fingers to unlock the device. In an ergonomically advantageous manner, the full weight of the hand and possibly even the arm force can be applied in a simple pressing gesture to disengage the locking teeth 1a, 1b from the corresponding locking openings 3a, 3b and enable the backwards sliding movement of the support part to release the accessory from the sport gear. This ergonomically advantageous configuration allows dimensioning the elastic organ of the device, to apply relatively large elastic forces Fe, for example, higher than 5N, to secure the locked configuration against accidental shocks, and yet enable a simple, effortless mounting and detaching operations.

Typical elastic forces involved in the locking mechanism of the present device will be in a range between 1N and 50N.

### List of references used in the figures

- 1, 1a, 1b: locking tooth
- 3, 3a, 3b: locking opening
- 5: elastic organ
- 10: base plate; first main part
- 11: assembly surface
- 12a, 12b: lateral guiding surfaces
- 12c, 12d: lateral guiding surfaces
- 13, 13a, 13b: contact surfaces
- 14, 15: blocking surfaces
- 17: top surface
- 18: engagement surface
- 20: support part ; second main part
- 21: assembly interface
- 22a, 22b: lateral guiding surfaces
- 22c, 22d: lateral guiding surfaces
- 23, 23a, 23b: contact surfaces
- 24, 25: blocking surfaces
- 26: handling surface
- 27, 28: engagement surfaces
- 29: perpendicular surface
- 31, 32, 33: embodiments of one of the two main parts of the invention
- 40: exemplary embodiment of the mounting device
- 41, 42: main parts of an embodiment of the mounting device
- 50: exemplary embodiment of the mounting device
- 51, 52: main parts of an embodiment of the mounting device
- 60: sport gear or vehicle
- 62: additional layer comprising a soft material
- 65: hand
- 71: docking pilar
- 72: flex base
- 73: tap holes
- 75a, 75b: flexible prongs
- 80: rigid case
- 81: rigid support structure
- 160 to 196: Reference numbers from Prior art document US11029584B2
- 160: sliding mount component
- 180a, 180b: flexible prongs
- 182a, 184a: rigid surfaces
- 186a, 186b: securing lips
- 188: base component
- 190a, 190b: rail system

- Fe: elastic force
- Fu: un-locking force
- Le: distance from rotation axis to the application point of the elastic force
- Lu: distance from rotation axis to the application point of the un-locking force
- x, y, z: cartesian axes,
- y: rotation axis

## Claims

1. Mounting device, for mounting an accessory on a sport gear or on a vehicle (60), comprising a first main part (10) which is a base plate, intended to be assembled with the sport gear or with the vehicle (60), and a second main part (20), which is a support for the accessory, said second main part (20) being connectable to said first main part (10) by a relative sliding movement along a longitudinal direction (x), until said base plate (10) and said support (20) are in a locked configuration, each of said two main parts (10, 20) comprising a rigid structure, said rigid structure comprising a pair of lateral guiding surfaces (12a, 12b, 22a, 22b) arranged so as to slide against the lateral surfaces of the other (22a, 22b, 12a, 12b), during said relative sliding movement,
**characterized in that** the rigid structure of one of said two main parts (10, 20) comprises a locking tooth (1) extending in a locking direction (z) which is essentially perpendicular to said longitudinal direction (x),
**in that** the rigid structure of the other of said two main parts (20, 10) comprises a locking opening (3), adapted to receive said locking tooth (1) in said locked configuration and,
**in that** one of said two main parts (10, 20), further comprises an elastic organ (5) adapted to apply a force (Fe) on the rigid structure of the other of said two main parts (20, 10) essentially parallel to said locking direction (z), so as to keep the locking tooth (1) engaged in the locking opening (3) in said locked configuration.

2. Mounting device according to claim 1, **characterized in that** the lateral guiding surfaces (12a, 12b, 22a, 22b) of each of said pairs of lateral guiding surfaces, are arranged as parallel surfaces facing opposite directions.

3. Mounting device according to claim 2, **characterized in that** the planes of the lateral guiding surfaces (12a, 12b, 22a, 22b) of each of said pairs of lateral guiding surfaces are comprised in respective planes which are parallel to both, said longitudinal direction and said locking direction.

4. Mounting device according to any of the preceding claims, **characterized in that** said locking tooth (1) is arranged such that it can be extracted from said locking opening (3), against the action of said elastic organ (5), by inducing a relative unlocking movement between said first main part (10) and said second main part (20), essentially taking place according to an unlocking direction (-z) essentially opposite to said locking direction (z), such that said two main parts (10, 20) can be separated by a reverse relative sliding movement.

5. Mounting device according to claim 4, **characterized in that** said relative unlocking movement comprises a rotation about a rotation axis (y) which is perpendicular to said longitudinal direction (x) and to said locking direction (z).

6. Mounting device according to claim 5, **characterized in that** said rigid structure of said second main part (20) comprises a handling surface (26) adapted to be pushed or pulled by a person's hand to perform said relative unlocking movement, said handling surface (26) being provided at a distance (Lu) from said rotation axis (y) at least equal to, and preferably greater than, the distance (Le) from said rotation axis (y) to an effective point of application of the force applied by said elastic organ (5) on the second main part (20).

7. Mounting device according to any of the preceding claims, **characterized in that** the rigid structure of at least one of said two main parts further comprises an engagement surface (18, 28, 27) defining an angle greater than 0° and lower than 90° with respect to said longitudinal direction (x) and configured to progressively deflect the elastic organ as said relative sliding movement is performed.

8. Mounting device according to any of the preceding claims, **characterized in that** the elastic organ (5) comprises a metallic part, in particular a folded metal sheet.

9. Mounting device according to any of the preceding claims, **characterized in that** said rigid structures of said two main parts are at least essentially plastic structures.

10. Mounting device according to any of the preceding claims, **characterized in that** said first main part (10) additionally comprises an interface of soft material (62) adapted to absorb shocks or vibrations from the sport gear or vehicle (60), such as to reduce the transmission of said shocks or vibrations to said second main part (20).

11. Mounting device according to any of the preceding claims, **characterized in that** said elastic organ (5) is borne by said first main part (10).

12. Mounting device according to claim 11, **characterized in that** said rigid structure of said first main part (10) and said elastic organ (5), are configured as two distinct parts which are assembled.

13. Mounting device according to claim 12, **characterized in that** said two distinct parts are configured to be assembled by simultaneously fixing them on the sport gear or vehicle (60).

14. Mounting device according to claim 11, **characterized in that** said first main part (10) comprises a central docking pillar (71) conformed as a single rigid structure comprising said pair of lateral guiding surfaces (12a, 12b, 12c, 12d) arranged as parallel surfaces facing opposite directions, and additionally comprising two contact surfaces (13a, 13b), perpendicular to said lateral guiding surfaces (12a, 12b, 12c, 12d) wherein the extremity of a first contact surface (13a) provides a first locking opening (3a) adapted to receive said locking tooth (1a) of the second main part (20), the extremity of the other contact surface (13b) providing a second locking opening (3b) adapted to receive an additional locking tooth (1b) of the second main part (20), said elastic organ (5) comprising two flexible prongs (75a, 75b) arranged on two opposite sides of said central docking pillar (71).

15. Mounting device according to claim 14, **characterized in that** said second main part (20) comprises a rigid case (80) configured to comprise said accessory and coupled to said rigid structure (81) of said second main part (20).

16. Mounting device according to any of the preceding claims, **characterized in that** said force (Fe) applied by the elastic organ (5) in the locked configuration is at least equal to, and preferably greater than 5N.

## Patentansprüche

1. Befestigungsvorrichtung zum Befestigen eines Zubehörteils an einem Sportgerät oder an einem Fahrzeug (60), umfassend ein erstes Hauptteil (10), das eine Basisplatte ist, die dazu bestimmt ist, mit dem Sportgerät oder mit dem Fahrzeug (60) zusammengebaut zu werden, und ein zweites Hauptteil (20), das eine Halterung für das Zubehörteil ist, wobei das zweite Hauptteil (20) mit dem ersten Hauptteil (10) durch eine relative Gleitbewegung entlang einer Längsrichtung (x), bis die Basisplatte (10) und die Halterung (20) in einer verriegelten Konfiguration sind, wobei jedes der beiden Hauptteile (10, 20) eine starre Struktur umfasst, wobei die starre Struktur ein Paar seitlicher Führungsflächen (12a, 12b, 22a, 22b) umfasst, die so angeordnet sind, dass sie während der genannten relativen Gleitbewegung an den Seitenflächen der anderen (22a, 22b, 12a , 12b) gleiten, **dadurch gekennzeichnet,**
**dass** die starre Struktur eines der beiden Hauptteile (10, 20) einen Verriegelungszahn (1) umfasst, der sich in einer Verriegelungsrichtung (z) erstreckt, die im Wesentlichen senkrecht zur genannten Längsrichtung (x) ist,
**dass** die starre Struktur des anderen der beiden Hauptteile (20, 10) eine Verriegelungsöffnung (3) umfasst, die so ausgelegt ist, dass sie den genannten Verriegelungszahn (1) in der verriegelten Konfiguration aufzunehmen, und
**dass** eines der beiden Hauptteile (10, 20) ferner ein elastisches Organ (5) umfasst, das so ausgelegt ist, dass es eine Kraft (Fe) auf die starre Struktur des anderen der beiden Hauptteile (20, 10) im Wesentlichen parallel zur Verriegelungsrichtung (z) ausübt, um den Verriegelungszahn (1) in der verriegelten Konfiguration in Eingriff mit der Verriegelungsöffnung (3) zu halten.

2. Befestigungsvorrichtung nach Anspruch 1, **dadurch gekennzeichnet, dass** die seitlichen Führungsflächen (12a, 12b, 22a, 22b) jedes der Paare seitlicher Führungsflächen als parallele Flächen angeordnet sind, die in entgegengesetzte Richtungen weisen.

3. Befestigungsvorrichtung nach Anspruch 2, **dadurch gekennzeichnet, dass** die Ebenen der seitlichen Führungsflächen (12a, 12b, 22a, 22b) jedes der Paare seitlicher Führungsflächen in jeweiligen Ebenen enthalten sind, die sowohl zur Längsrichtung als auch zur Verriegelungsrichtung parallel sind.

4. Befestigungsvorrichtung nach einem der vorstehenden Ansprüche, **dadurch gekennzeichnet, dass** der Verriegelungszahn (1) so angeordnet ist, dass er aus der Verriegelungsöffnung (3) gegen die Wirkung des elastischen Organs (5) herausgezogen werden kann, indem eine relative Entriegelungsbewegung zwischen dem ersten Hauptteil (10) und dem zweiten Hauptteil (20) induziert wird, die im Wesentlichen gemäß einer Entriegelungsrichtung (-z) stattfindet, die im Wesentlichen entgegengesetzt zur Verriegelungsrichtung (z) ist, so dass die beiden Hauptteile (10, 20) durch eine umgekehrte relative Gleitbewegung getrennt werden können.

5. Befestigungsvorrichtung nach Anspruch 4, **dadurch gekennzeichnet, dass** die relative Entriegelungsbewegung eine Drehung um eine Drehachse (y) umfasst, die senkrecht zur Längsrichtung (x) und zur Verriegelungsrichtung (z) ist.

6. Befestigungsvorrichtung nach Anspruch 5, **dadurch gekennzeichnet, dass** die starre Struktur des zweiten Hauptteils (20) eine Handhabungsfläche (26) umfasst, die so angepasst ist, dass sie von der Hand einer Person gedrückt oder gezogen werden kann, um die relative Entriegelungsbewegung auszuführen, wobei die Handhabungsfläche (26) in einem Abstand (Lu) von der Drehachse (y) vorgesehen ist, der mindestens gleich und vorzugsweise größer als der Abstand (Le) von der Drehachse (y) zu einem wirksamen Angriffspunkt der Kraft ist, die durch das elastische Organ (5) auf das zweite Hauptteil (20) ausgeübt wird.

7. Befestigungsvorrichtung nach einem der vorstehenden Ansprüche, **dadurch gekennzeichnet, dass** die starre Struktur von mindestens einem der beiden Hauptteile außerdem eine Eingriffsfläche (18, 28, 27) umfasst, die einen Winkel größer als 0° und kleiner als 90° in Bezug auf die Längsrichtung (x) definiert und so konfiguriert ist, dass sie das elastische Organ bei Ausführung der relativen Gleitbewegung progressiv auslenkt.

8. Befestigungsvorrichtung nach einem der vorstehenden Ansprüche, **dadurch gekennzeichnet, dass** das elastische Organ (5) ein Metallteil, insbesondere ein gefaltetes Metallblech, umfasst.

9. Befestigungsvorrichtung nach einem der vorstehenden Ansprüche, **dadurch gekennzeichnet, dass** die starren Strukturen der beiden Hauptteile zumindest im Wesentlichen Kunststoffstrukturen sind.

10. Befestigungsvorrichtung nach einem der vorstehenden Ansprüche, **dadurch gekennzeichnet, dass** das erste Hauptteil (10) zusätzlich eine Zwischenschicht aus weichem Material (62) umfasst, die so beschaffen ist, dass sie Stöße oder Vibrationen von dem Sportgerät oder dem Fahrzeug (60) absorbiert, um die Übertragung der Stöße oder Vibrationen auf das zweite Hauptteil (20) zu verringern.

11. Befestigungsvorrichtung nach einem der vorstehenden Ansprüche, **dadurch gekennzeichnet, dass** das elastische Organ (5) von dem ersten Hauptteil (10) getragen wird.

12. Befestigungsvorrichtung nach Anspruch 11, **dadurch gekennzeichnet, dass** die starre Struktur des ersten Hauptteils (10) und das elastische Organ (5) als zwei getrennte Teile konfiguriert sind, die zusammengebaut werden.

13. Befestigungsvorrichtung nach Anspruch 12, **dadurch gekennzeichnet, dass** die zwei getrennten Teile so konfiguriert sind, dass sie durch gleichzeitiges Befestigen an dem Sportgerät oder Fahrzeug (60) zusammengebaut werden.

14. Befestigungsvorrichtung nach Anspruch 11, **dadurch gekennzeichnet, dass** das erste Hauptteil (10) eine zentrale Andocksäule (71) umfasst, die als einzelne starre Struktur ausgebildet ist, die das Paar seitlicher Führungsflächen (12a, 12b, 12c, 12d) umfasst, die als parallele Flächen angeordnet sind, die in entgegengesetzte Richtungen weisen, und zusätzlich zwei Kontaktflächen (13a, 13b), die senkrecht zu den seitlichen Führungsflächen (12a, 12b, 12c, 12d) verlaufen, wobei das Ende einer ersten Kontaktfläche (13a) eine erste Verriegelungsöffnung (3a) bereitstellt, die so angepasst ist, dass sie den Verriegelungszahn (1a) des zweiten Hauptteils (20) aufnimmt, das Ende der anderen Kontaktfläche (13b) eine zweite Verriegelungsöffnung (3b) bereitstellt, die zur Aufnahme eines zusätzlichen Verriegelungszahns (1b) des zweiten Hauptteils (20) angepasst ist, wobei das elastische Organ (5) zwei flexible Zinken (75a, 75b) umfasst, die an zwei gegenüberliegenden Seiten der zentralen Andocksäule (71) angeordnet sind.

15. Befestigungsvorrichtung nach Anspruch 14, **dadurch gekennzeichnet, dass** das zweite Hauptteil (20) ein starres Gehäuse (80) umfasst, das so konfiguriert ist, dass es das Zubehörteil umfasst, und das mit der starren Struktur (81) des zweiten Hauptteils (20) verbunden ist.

16. Befestigungsvorrichtung nach einem der vorstehenden Ansprüche, **dadurch gekennzeichnet, dass** die Kraft (Fe), die durch das elastische Organ (5) in der verriegelten Konfiguration ausgeübt wird, mindestens gleich und vorzugsweise größer als 5 N ist.

## Revendications

1. Dispositif de montage, pour le montage d'un accessoire sur un équipement sportif ou sur un véhicule (60), comprenant une première partie principale (10) qui est une plaque de base, destinée à être assemblée avec l'équipement sportif ou avec le véhicule (60), et une deuxième partie principale (20), qui est un support pour l'accessoire, ladite deuxième partie principale (20) pouvant être reliée à ladite première partie principale (10) par un mouvement de coulissement relatif le long d'une direction longitudinale (x), jusqu'à ce que ladite plaque de base (10) et ledit support (20) soient dans une configuration verrouillée, chacune de ces deux parties principales (10, 20) comprenant une structure rigide, ladite structure rigide comprenant une paire de surfaces de guidage latérales (12a, 12b, 22a, 22b) disposées de manière à glisser contre les surfaces latérales de l'autre (22a, 22b, 12a, 12b), pendant ledit mouvement de coulissement relatif,
**caractérisé en ce que** la structure rigide de l'une desdites deux parties principales (10, 20) comprend une dent de verrouillage (1) s'étendant dans une direction de verrouillage (z) qui est essentiellement perpendiculaire à ladite direction longitudinale (x),
**en ce que** la structure rigide de l'autre desdites deux parties principales (20, 10) comprend une ouverture de verrouillage (3), adaptée pour recevoir ladite dent de verrouillage (1) dans ladite configuration verrouillée et,
**en ce que** l'une desdites deux parties principales (10, 20) comprend en outre un organe élastique (5) adapté pour appliquer une force (Fe) sur la structure rigide de l'autre desdites deux parties principales (20, 10) essentiellement parallèle à ladite direction de verrouillage (z), de manière à maintenir la dent de verrouillage (1) engagée dans l'ouverture de verrouillage (3) dans ladite configuration verrouillée.

2. Dispositif de montage selon la revendication 1, **caractérisé en ce que** les surfaces de guidage latérales (12a, 12b, 22a, 22b) de chacune desdites paires de surfaces de guidage latérales sont disposées comme des surfaces parallèles orientées suivant des directions opposées.

3. Dispositif de montage selon la revendication 2, **caractérisé en ce que** les plans des surfaces de guidage latérales (12a, 12b, 22a, 22b) de chacune desdites paires de surfaces de guidage latérales sont compris dans des plans respectifs qui sont parallèles à la fois à ladite direction longitudinale et à ladite direction de verrouillage.

4. Dispositif de montage selon l'une quelconque des revendications précédentes, **caractérisé en ce que** ladite dent de verrouillage (1) est agencée de manière à pouvoir être extraite de ladite ouverture de verrouillage (3), contre l'action dudit organe élastique (5), en induisant un mouvement relatif de déverrouillage entre ladite première partie principale (10) et ladite seconde partie principale (20), s'effectuant essentiellement selon une direction de déverrouillage (-z) essentiellement opposée à ladite direction de verrouillage (z), de sorte que lesdites deux parties principales (10, 20) puissent être séparées par un mouvement relatif de coulissement inverse.

5. Dispositif de montage selon la revendication 4, **caractérisé en ce que** ledit mouvement relatif de déverrouillage comprend une rotation autour d'un axe de rotation (y) qui est perpendiculaire à ladite direction longitudinale (x) et à ladite direction de verrouillage (z).

6. Dispositif de montage selon la revendication 5, **caractérisé en ce que** ladite structure rigide de ladite deuxième partie principale (20) comprend une surface de manipulation (26) adaptée pour être poussée ou tirée par la main d'une personne pour effectuer ledit mouvement relatif de déverrouillage, ladite surface de manipulation (26) étant agencée à une distance (Lu) dudit axe de rotation (y) au moins égale, et de préférence supérieure, à la distance (Le) dudit axe de rotation (y) à un point effectif d'application de la force appliquée par ledit organe élastique (5) sur la deuxième partie principale (20).

7. Dispositif de montage selon l'une quelconque des revendications précédentes, **caractérisé en ce que** la structure rigide d'au moins une desdites deux parties principales comprend en outre une surface d'engagement (18, 28, 27) définissant un angle supérieur à 0° et inférieur à 90° par rapport à ladite direction longitudinale (x) et configurée pour déformer progressivement l'organe élastique au fur et à mesure de l'exécution dudit mouvement de coulissement relatif.

8. Dispositif de montage selon l'une quelconque des revendications précédentes, **caractérisé en ce que** l'organe élastique (5) comprend une pièce métallique, notamment une feuille métallique pliée.

9. Dispositif de montage selon l'une quelconque des revendications précédentes, **caractérisé en ce que** lesdites structures rigides des deux parties principales sont au moins essentiellement des structures en plastique.

10. Dispositif de montage selon l'une quelconque des revendications précédentes, **caractérisé en ce que** ladite première partie principale (10) comprend en outre une interface en matériau souple (62) adaptée pour absorber les chocs ou les vibrations de l'équipement sportif ou du véhicule (60), de manière à réduire la transmission desdits chocs ou vibrations à ladite deuxième partie principale (20).

11. Dispositif de montage selon l'une quelconque des revendications précédentes, **caractérisé en ce que** ledit organe élastique (5) est porté par ladite première partie principale (10).

12. Dispositif de montage selon la revendication 11, **caractérisé en ce que** ladite structure rigide de ladite première partie principale (10) et ledit organe élastique (5) sont configurés comme deux composants distincts qui sont assemblés.

13. Dispositif de montage selon la revendication 12, **caractérisé en ce que** lesdits deux composants distincts sont configurés pour être assemblés en les fixant simultanément sur l'équipement sportif ou le véhicule (60).

14. Dispositif de montage selon la revendication 11, **caractérisé en ce que** ladite première partie principale (10) comprend un pilier d'amarrage central (71) conformé comme une structure rigide unique comprenant ladite paire de surfaces de guidage latérales (12a, 12b, 12c, 12d) disposées comme des surfaces parallèles orientées suivant des directions opposées, et comprenant en outre deux surfaces de contact (13a, 13b), perpendiculaires auxdites surfaces de guidage latérales (12a, 12b, 12c, 12d) dans lesquelles l'extrémité d'une première surface de contact (13a) fournit une première ouverture de verrouillage (3a) adaptée pour recevoir ladite dent de verrouillage (1a) de la deuxième partie principale (20), l'extrémité de l'autre surface de contact (13b) fournissant une deuxième ouverture de verrouillage (3b) adaptée pour recevoir une dent de verrouillage supplémentaire (1b) de la deuxième partie principale (20), ledit organe élastique (5) comprenant deux broches flexibles (75a, 75b) disposées sur deux côtés opposés dudit pilier d'amarrage central (71).

15. Dispositif de montage selon la revendication 14, **caractérisé en ce que** ladite deuxième partie principale (20) comprend un boîtier rigide (80) configuré pour comprendre ledit accessoire et couplé à ladite structure rigide (81) de ladite deuxième partie principale (20).

16. Dispositif de montage selon l'une quelconque des revendications précédentes, **caractérisé en ce que** ladite force (Fe) appliquée par l'organe élastique (5) en configuration verrouillée est au moins égale, et de préférence supérieure à 5N.
